# EUROPEAN PATENT APPLICATION

(11) **EP 4 219 575 A1**
(43) Date of publication of application: **02.08.2023**
(21) Application number: 22154461.2
(22) Date of filing: 01.02.2022
(51) Int. Cl.: C08G 18/10, C08G 18/32, C08G 18/38, C08G 18/48, C08G 18/63, C08G 18/72, C08G 18/76, C08G 18/79, C08L 75/08

(54) **SELF-EXTINGUISHING AND INTUMESCENT FLAME RETARDANT POLYURETHANE ELASTOMER COMPOSITIONS**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to an elastomeric polyurethane comprising at least a first flame retardant in an amount of ≥ 5% to ≤ 9% by weight based on the total weight of the elastomeric polyurethane and at least one mineral filler in an amount of ≥ 3% to ≤ 5% by weight based on the total weight of the elastomeric polyurethane, wherein the at least a first flame retardant is at least one phosphorous comprising polyol, wherein the at least one mineral filler is selected from the group consisting of carbonates, sulfates, silicates, mixtures and hydrated modifications thereof and wherein the total amount of the first flame retardant and the mineral filler is in the range of > 10% to ≤ 14% by weight, based on the total weight of the elastomeric polyurethane, to a process for the preparation of said elastomeric polyurethane, to the use of these elastomeric polyurethane in offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers, and to offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers comprising such a polyurethane.

## Description

The present invention relates to an elastomeric polyurethane comprising at least a first flame retardant in an amount of ≥ 5% to ≤ 9% by weight based on the total weight of the elastomeric polyurethane and at least one mineral filler in an amount of ≥ 3% to ≤ 5% by weight based on the total weight of the elastomeric polyurethane, wherein the at least a first flame retardant is at least one phosphorous comprising polyol, wherein the at least one mineral filler is selected from the group consisting of carbonates, sulfates, silicates, mixtures and hydrated modifications thereof and wherein the total amount of the first flame retardant and the mineral filler is in the range of ≥ 10% to ≤ 14% by weight, based on the total weight of the elastomeric polyurethane, to a process for the preparation of said elastomeric polyurethane, to the use of these elastomeric polyurethane in offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers, and to offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers comprising such a polyurethane.

Methods for auto-extinguishing of certain materials, in particular using phosphorous comprising compounds, for example phosphorous comprising polyols, are mentioned in the prior art.

For example, CA 2603412 discloses a mineral wool, an insulating product comprising the mineral wool and a production method thereof. The mineral wool according to this document comprises a phosphorous comprising polyol as a flame retardant.

EP 2 062 905 A2 discloses mixtures of phosphorus-containing compounds, method for production of the same and use of the same as flame-retardant material.

EP 1 061 095 A1 discloses a process for the preparation of halogen-free, flame-retardant polyurethane foams with high oxidative thermal resistance, with hydroxyalkylphosphonates being used as halogen-free flame retardants and as core discoloration inhibitors.

EP 1 142 941 A1 discloses a flame-retardant rigid polyurethane foam and a process for its production, whereby products are obtained which meet the necessary and specified requirements in terms of flame resistance, processability, low smoke density and low smoke toxicity. According to this document, this goal is achieved by using a combination of alkoxylated alkylphosphonic acids and ammonium polyphosphate as the flame retardant.

WO 2005/061605 A2 discloses a fire-retardant system comprising at least one type of salts of phosphoric, phosphinic and phosphonic acids and at least one other type compound stabilizing the fire-retardant agent.

The prior art does not disclose a castable elastomeric polyurethane having both self-extinguishing and intumescent characteristics, with a phosphorous comprising polyol in his networking.

Objective of the present invention is therefore to provide a castable elastomeric polyurethane having both self-extinguishing and intumescent characteristics and a process for its preparation. Furthermore, an objective of the present invention is to provide a system which is castable at room temperature having the mentioned advantages.

These objectives have been solved by an elastomeric polyurethane comprising at least a first flame retardant in an amount of ≥ 5% to ≤ 9% by weight based on the total weight of the elastomeric polyurethane and at least one mineral filler in an amount of ≥ 3% to ≤ 5% by weight based on the total weight of the elastomeric polyurethane, wherein the at least a first flame retardant is at least one phosphorous comprising polyol, wherein the at least one mineral filler is selected from the group consisting of carbonates, sulfates, silicates, mixtures and hydrated modifications thereof and wherein the total amount of the first flame retardant and the mineral filler is in the range of ≥ 10% to ≤ 14% by weight, based on the total weight of the elastomeric polyurethane.

These objectives have been further solved by a process for the preparation an elastomeric polyurethane according to the present invention.

These objectives have been further solved by the use of these elastomeric polyurethane in offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers, and by offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers comprising such a polyurethane.

In accordance with the present invention, it has been discovered that castable polyurethane elastomers can be formulated with enhanced fire resistance properties, leading to auto-extinguish elastomers. The elastomeric polyurethane according to the present invention will be explained in detail in the following.

In general, any castable elastomeric polyurethane can be used and processed according to the present invention.

According to the present invention the wording "castable" means a polyurethane having a process temperature of 15 to 35 °C as well as mold temperature within the same temperature range. The demolding time of the polyurethane according to the present invention should be preferably inferior to one day, more preferably inferior to 6 hours. The pot-life of the system should preferably be superior to 30 seconds, preferably 2 to 30 minutes.

According to the present invention the wording "elastomeric" means a polyurethane having/alternance of polyols macromolecular chains corresponding to "soft segment", with urethane reticulation bonding to short segments called "hard segment" composed of urethane bonding.

According to a preferred embodiment of the present invention, the polyurethane according to the present invention is obtained from the reaction of at least one prepolymer and at least one chain extender comprising the at least one phosphorous comprising polyol.

The number-average molecular weight (Mn) was determined by gel permeation chromatography (GPC) in tetrahydrofuran at 23°C. The procedure is according to DIN 55672-1: "Gel permeation chromatography, Part 1 - Tetrahydrofuran as eluent" (SECurity GPC System from PSS Polymer Service, flow rate 1.0 ml/min; columns: 2×PSS SDV linear M, 8×300 mm, 5 µm; RID detector). Polystyrene samples of known molar mass are used for calibration. The number-average molecular weight is calculated with software support. Baseline points and evaluation limits are fixed in accordance with DIN 55672 Part 1.

The present invention therefore preferably relates to the polyurethane according to the present invention, wherein it is obtained from the reaction of at least one prepolymer and at least one chain extender comprising the at least first flame retardant wherein the at least a first flame retardant is at least one phosphorous comprising polyol.

The, preferably isocyanate terminated, prepolymer according to the present invention is preferably obtained from the reaction of at least one polyisocyanate and at least one polyol.

Polyisocyanates that are used according to the present invention, are in general selected from the group of all polyisocyanates known to the skilled artisan to be suitable to be used in elastomeric polyurethanes.

According to a preferred embodiment of the present invention, the at least one polyisocyanate, preferably the at least one diisocyanate, is selected from the group consisting of 2,4-MDI (2,4-methylene diphenyl diisocyanate), 4,4-MDI (4,4-methylene diphenyl diisocyanate), carbodiimide modified 2,4- and/or 4,4-MDI, H12MDI, 2,4-toluene diisocyanates (2,4-TDI), 2,6 toluene diisocyanates (2,6-TDI), isophorone diisocyanates (IPDI), 1,6-hexamethylene diisocyanate (HDI), 1,5-nathpthalene diisocyanate (1,5-NDI), 1,4-cyclohexane diiscyanates (CHDI) and mixture thereof.

According to a preferred embodiment of the present invention, the prepolymer according to the present invention is prepared from a mixture of 35 to 40% by weight of a mixture of 2,4-MDI and 4,4-MDI, further preferred with ratio of 55% by weight of 2,4-MDI and 45% by weight of 4,4-MDI, respectively, and preferably 55 to 60% by weight of carbodiimide modified 4,4-MDI.

The prepolymer is preferably also containing polyether polyol with a low molecular weight with a proportion of 5 to 12 % by weight, preferably 7 to 9% by weight based on the total weight of the prepolymer.

According to a further preferred embodiment of the present invention the at least one polyisocyanate is reacted with at least one polyol, further preferred a polyol selected from the group consisting of polyester polyols, polyether polyols, polycarbonate polyols and mixtures thereof. A preferred polyester polyol that could be used should be viscous or with a syrupy consistence at a temperature of for example 15 to 35 °C. One specific example is the polyester obtainable under the tradename Baytec^{®} D24.

According to the present invention, at least one polyol having a number average molecular weight (Mn) of at least 100 g/mol is used to prepare the prepolymer according to the present invention, wherein Mn has been determined by gel permeation chromatography. Further preferred the at least one polyol has a Mn of 100 to 6000 g/mol, wherein Mn has been determined by gel permeation chromatography. Particularly preferred, polyether polyols are used as at least one polyol to prepare the at least one prepolymer according to the present invention.

According to the present invention, the most preferred at least one polyol which is used for the preparation of the at least one polymer is at least one polyalkylene ether polyol, which is in general known to the skilled artisan.

Preferably, the at least one polyalkylene ether polyol is represented by the general formula (I)

HO(CHz-CHR-O)ₙH (I)

wherein R is hydroxy, hydrogen or an alkyl radical having 1 to 5 carbon atoms, preferably methyl group, ethyl group, propyl group and n is an integer large enough that the polyalkylene ether polyol according to general formula (I) has a number average molecular weight (Mn) of at least 100 g/mol, preferably at least 200 g /mol, wherein Mn has been determined by gel permeation chromatography.

These polyalkene ether polyol according to general formula (I) are well-known components of polyurethane products and can be prepared by the polymerization of cyclic ethers, such as alkylene oxides, for example ethylene oxide, propylene oxide, and glycols, dihydroxyethers, and the like by known methods.

According to a preferred embodiment of the present invention the at least one polyol which is used to prepare the at least one prepolymer according to the present invention could be a combination of a high molecular weight polyol and of a low molecular weight polyol. In the present invention, the at least one polyol which is used to prepare the at least one prepolymer is preferably a low molecular weight polyol.

Preferred examples of low molecular weight polyols are selected from the group consisting of aliphatic or aromatic substituted or branched glycols. Such suitable glycols are selected from the group consisting of ethylene glycol, diethylene glycol, triethylene glycol, tetra ethylene glycol, propylene glycol, dipropylene glycol, trimetylolpropane, tripropylene glycol, neopentyl glycol, 1,3-butanediol, 1,4 butanediol and mixtures thereof.

The at least one prepolymer according to the present invention is preferably an isocyanate terminated prepolymer. The amount of isocyanate end groups of the at least one prepolymer according to the present invention is in general 1 to 30% by weight, preferably 12 to 27% by weight, based on the total weight of the prepolymer. The amount of isocyanate end groups have been determined in accordance with ISO 14896:2009.

In general, the at least prepolymer according to the present invention is prepared from at least one polyisocyanate and at least one polyol, wherein the stochiometric ratio of isocyanate groups in the at least one polyisocyanate and isocyanate reactive groups, preferably hydroxy groups, in the at least one polyol, is adjusted so that at least one isocyanate group terminated prepolymer is obtained. In particular, the stoichiometric ratio of isocyanates groups being present in the at least one polyisocyanate to hydroxyl groups being present in the at least one polyol is preferably 1.5 to 20.

The amount of prepolymer in respect of the whole elastomeric polyurethane is in general 10 to 75% by weight, preferably 12 to 40 % by weight based on the total weight of the elastomeric polyurethane.

The at least one elastomeric polyurethane according to the present invention further comprises at least one chain extender.

In general, any chain extender known to the skilled artisan can be used in the elastomeric polyurethane according to the present invention, preferably polyols are used. The polyols that are preferably used as chain extender can be selected from a wide variety of conventional and well-known polyol material or polyol blends.

According to a preferred embodiment of the present invention, the prepolymer according to the present invention is obtained from the reaction of at least one polyisocyanate and at least one polyol, wherein the at least one polyol with molecular weight from 100 to 500 g/mol.

The present invention therefore preferably relates to the polyurethane according to the present invention, wherein the at least one polyurethane is obtained from the reaction of at least one prepolymer and at least one chain extender, wherein the at least one chain extender is a mixture of at least one polyol and at least a first flame retardant, wherein the at least a first flame retardant is at least one phosphorous comprising polyol.

Suitable polyols that can be used as the at least one chain extender according to the present invention are for example selected from the group consisting of high molecular polyols, low molecular polyols or low molecular monools, diols or triols.

High molecular weight polyols that can be used according to the present invention are selected from the group consisting of polyether polyols, polycarbonates polyols, polyester polyols and mixtures thereof. "High molecular weight" according to the present invention means a number average molecular weight (Mn) of at least 100 g/mol, preferably 500 to 6000 g/mol, wherein Mn has been determined by gel permeation chromatography.

Particularly preferred examples of high molecular weight polyols are (co)polyester polyols or (co)polyether polyols, preferably (co)polyether polyols, each having a number average molecular weight (Mn) of at least 100 g/mol, preferably 500 to 6000 g/mol, wherein Mn has been determined by gel permeation chromatography.

Particularly preferably, the at least one polyether polyol used as chain extender according to the present invention is at least one polyalkylene ether polyol represented by the general formula (I)

HO(CH₂-CHR-O)ₙH (I),

wherein R is selected from hydroxy, hydrogen or an alkyl radical having 1 to 10 carbon atoms, preferably methyl, ethyl, propyl, and n is an integer large enough that the polyalkylene ether polyol according to general formula (I) has a number average molecular weight (Mn) of at least 100 g/mol, preferably at least 500 g/mol, wherein Mn has been determined by gel permeation chromatography.

These polyalkene ether polyol according to general formula (I) are well-known components of polyurethane products and can be prepared by the polymerization of cyclic ethers, such as alkylene oxides, for example ethylen oxide and/or propylene oxide, and glycols, dihydroxyethers, and the like by known methods.

According to an embodiment, the at least one polymer polyol could be also selected from filled polyether polyols with functionality from 2 to 4, containing 15 to 60% by weight of solid particles based on the total weight of 'the polyol, and wherein the polymer polyol is a dispersion of polymer solid particles such as styrene-based polymer particles in a polyol. Examples of styrene polymer particles include so-called "SAN" particles of styrene-acrylonitrile.

Examples of low molecular weight polyols are preferably selected from the group consisting of aliphatic or aromatic substituted or branched glycols and mixture thereof, further preferred the low molecular weight polyols are selected from the group consisting of ethylene glycol, diethylene glycol, triethylene glycol, tetra ethylene glycol, propylene glycol, dipropylene glycol, tripropylene glycol, neopentyl glycol, 1,3-butanediol, 1,4-butanediol, propanediol, trimetylolpropane and mixtures thereof. The most preferred low molecular weight polyol used as at least one chain extender is 1,4-butanediol, propanediol and/or trimetylolpropane.

The at least one polyol used as chain extender according to the present invention preferably comprises three high molecular weight polyols: one is based on grafted SAN polyether polyol, with a molecular weight around 5400 g/ mol ; one based on glycerol, ethylene oxide and propylene oxide with a molecular weight of 4200 g/ mol) and one polyol with a shorter molecular weight, around 400 g/ mol, based on trimethylolpropane and propylene oxide). Those three high molecular weight polyols are combined with propanediol (called SUSTERRA^{®}, produced by Dupont Tate & Lyle BioProducts) as low molecular weight polyol.

A combination of polyether polyol could be based on a ratio of 95% by weight of polyether polyol with a molecular weight of at least 2000 g/ mol and 5% by weight of a mixture comprising a low molecular weight polyol and /or diol.

The at least one chain extender of the present invention is a mixture of at least one polyol and at least a first flame retardant, wherein the at least a first flame retardant is at least one phosphorous comprising polyol.

The at least one phosphorous comprising polyol that is used according to the present invention as an at least first flame retardant preferably corresponds to the general formula (1) below: 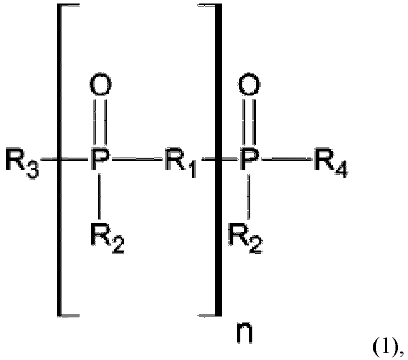 in which:
n is 1 to 100, preferably 1 to 50, especially 2 to 10;
the substituents R1 to R4 are identical or different, predominantly carbon-based entities, preferably of possibly branched alkyl, aryl, alkenyl, alkynyl, acyl or hydroxyalkyl type, which may possibly be of oligomeric or polymeric nature and/or contain one or more heteroatoms chosen from N, O, S or P. It is preferable that at least one of these substituents, especially the substituent R1 contains an oxygen atom linked to the phosphorus atom of the main chain.

If two of the substituents contain an oxygen atom linked to the phosphorus atom of the main chain, the phosphorus compound is advantageously a phosphonic polyester type oligomer or polymer of general formula (2) below: 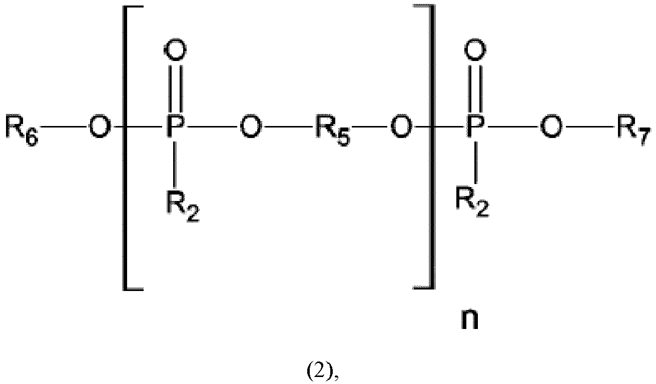 in which:
is 1 to 100, preferably 1 to 50, especially 2 to 10,
the substituents R2 to R7 are identical or different, predominantly carbon-based entities, preferably of possibly branched alkyl, aryl, alkenyl, alkynyl, acyl or hydroxyalkyl type, which may possibly be of oligomeric or polymeric nature and/or contain one or more heteroatoms chosen from N, O, S or P.

When all the substituents contain an oxygen atom linked to the phosphorus atom of the main chain, another family of preferred phosphorus compounds is made up of phosphoric polyacid- or polyester-type oligomers or polymers of general formula (3) below: 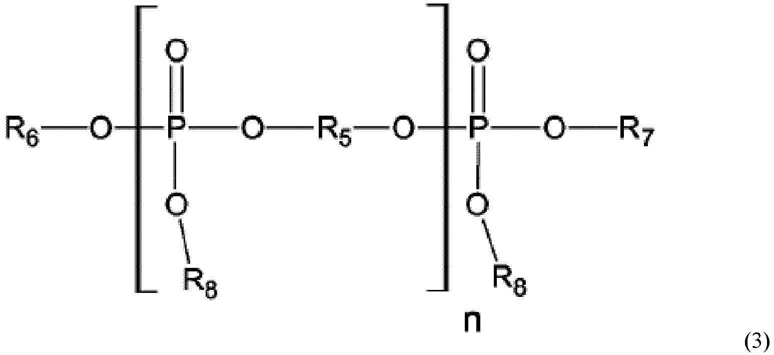 wherein R₅, R₆, R₇, R₈ and n have independently of another the following meanings:
- n: integer of 1 to 100, preferably 1 to 50, particularly preferred 2 to 10,
- R₅: alkylene group having 1 to 15 carbon atoms, preferably 2 to 10 carbon atoms,
- R₆ to R₈: independently of another, identical or different, hydrogen and/or carbon entities, preferably based on alkyl, aryl, alkenyl, acyl or hydroxyalkyl that can be substituted, and that can be based on oligomers or polymers nature, and/or be able to contain several heteroatoms that could be N, O, S or P, wherein the number of carbon atoms in each substituent is from 1 to 15, preferably 2 and 10.

The compound according to general formula (3) is preferably used.

A particularly preferred phosphorous comprising polyol which is used according to the present invention is called Exolit^{®} OP 550 from CLARIANT.

According to the embodiment, wherein n is superior to 1, some of the groups R₅, R₆ and R₇ could be linked between each other by covalent bond.

Compounds according to general formula (1) could be obtained especially by esterification reactions or transesterifications between acid or esters, respectively phosphonic and phosphoric and polyols, preferably diols, polyacids, preferably diacids, or with epoxy compounds.

The phosphorus comprising polyol which is used according to the present invention takes part in the polymeric chain of the elastomeric polyurethane and finally in the elastomer network.

According to the present invention, the number of isocyanate reactive groups, in particular hydroxy groups or amine groups in the chain extender should be approximately equal to the number of isocyanate groups in the prepolymer. Preferably the molar ratio of isocyanate reactive groups in the chain extender to isocyanate groups in the prepolymer is 0.7 to 1.3.

The amount of chain extender in respect of the whole elastomeric polyurethane is in general 20 to 90% by weight, preferably 70 to 90 % by weight.

According to a preferred embodiment, the elastomeric polyurethane comprises at least a second flame retardant which is different from the first flame retardant, preferably in an amount of ≥ 0,1 to ≤ 10% by weight based on the total weight of the elastomeric polyurethane.

Suitable flame retardants are phosphates, phosphonates, phosphorus polyols, phosphanates oligomers.

A particularly preferred second flame retardant which is used according to the present invention is called NOFIA^{®} OL1000 from FRX Polymers.

In a preferred embodiment, the elastomeric polyurethane contains at least one second flame retardant preferably in an amount of ≥ 0,1% to ≤ 5% by weight based on the total weight of the elastomeric polyurethane.

The elastomeric polyurethane according to the present invention may further comprise additional components beside the already mentioned ones. These additional components are for example selected from the group consisting of curatives, for example diamines, additives, catalyst, stabilizer, antioxidants, and mixtures thereof.

Suitable diamines are for example selected from the group consisting of dietyltoluene diamine (DETDA, for example Ethacure^{®} 100 from Albermarle Corporation), isophorondiamine (IPDA), dimethylthio-toluene diamine (Ethacure^{®} 300, for example from Albermarle Corporation) and mixtures thereof.

Suitable catalysts can optionally be used in the process of the invention. The conventional tertiary amines known from the prior art, e.g. triethylamine, dimethylcyclohexylamine, N-methylmorpholine, N,N'-dimethylpiperazine, 2-(dimethylaminoethoxy)ethanol, diazabicyclo[2.2.2]octane (DABCO), diethylethanolamine, N-cocomorhpoline, N,N-diethyl-3-diethylaminopropylamine dimethylbenzylamine, 1,8-Diazabicycloundec-7-ene (DBU),triazabicyclodecene (TBD) and N-methyltriazabyclodecene (MTBD). Organometallic compounds, for example titanium compounds, iron compounds, bismuth compounds, zinc compounds, or tin compounds, for example tin diacetate, tin dioctanoate, tin dilaurate, or the dialkyltin salts of aliphatic carboxylic acids, for example dibutyltin diacetate or dibutyltin dilaurate, are suitable catalysts for the production of PU elastomers. Preferred catalysts are amine compounds or organometallic compounds, in particular tin compounds.

Suitable stabilizers are for example selected from the group consisting dialkylphosphates, acid chlorides, phtalic acid dichloride, phosphites and mixtures thereof. Said stabilizer are preferably used in amounts smaller than 1% by weight, based on the elastomeric polyurethane.

The elastomeric polyurethane according to the present invention further comprises at least one mineral filler in an amount of ≥ 3% to ≤ 5% by weight based on the total weight of the elastomeric polyurethane, wherein the at least one mineral filler is selected from the group consisting of carbonates, sulfates, silicates, mixtures and hydrated modifications thereof and wherein the total amount of the first flame retardant and the mineral filler is in the range of ≥ 10% to ≤ 14% by weight, based on the total weight of the elastomeric polyurethane.

In general, the at least one mineral filler can be selected from the group consisting of carbonates, sulfates, silicates, mixtures and hydrated modifications thereof..

Preferably, the at least one mineral filler is selected from the group consisting of carbonates, sulfates, mixtures and hydrated modifications thereof, preferably a carbonate or hydrated modification thereof, more preferably selected from the group of Li₂CO₃, Na₂CO₃, K₂CO₃, MgCO₃, CaCO₃, BaCO₃, mixtures and hydrated modifications thereof.

The silicates are in particular sodium silico-aluminate, calcium silicate, magnesium silicate, mixtures thereof as well hydrated modifications of the mentioned fillers.

According to an embodiment, the elastomeric polyurethane comprises at least one additional filler, which is different from the at least one mineral filler.

Preferably wherein the additional filler is selected from the group consisting of SiO₂, CaO, MgO, Na₂O, K₂O, B₂O₃, Fe₂O₃, P₂O₅, zirconia, cerium oxide, TiO₂, Al(OH)₃, mixtures and hydrated modifications thereof.

A particularly preferred additional filler is Al(OH)₃.

The at least one mineral filler and / or the at least one additional which is used according to the present invention has preferably a particle size of 1 to 10 µm, particularly preferably 2 to 8 µm, for example 5 µm.

The present invention also relates to a process for the preparation an elastomeric polyurethane according to the present invention, at least comprising the following steps:
(A) Provision at least prepolymer made of at least one polyisocyanate and at least one polyol,
(B) Provision at least one chain extender comprising at least one polyol, at least a first flame retardant and at least one mineral filler and optionally at least a second flame retardant which is different from the first flame retardant and / or optionally an additional filler which is different, and
(C) Reaction of the at least one prepolymer from step (A) and the at least one chain extender from step (B) to obtain the elastomeric polyurethane,
wherein the at least a first flame retardant is at least one phosphorous comprising polyol and wherein the at least one mineral filler is selected from the group consisting of carbonates, sulfates, silicates, mixtures and hydrated modifications thereof.

The steps of the process according to the present invention will be explained in detail in the following. All details in respect of chemistry of the components used have already mentioned above and apply hereto accordingly.

Step (A) of the process according to the present invention comprises the provision of at least prepolymer made of at least one polyisocyanate and at least one polyol.

In general, step (A) of the process according to the present invention can be done by any method known to the skilled in the art. The prepolymer that is provided in step (A) of the process is made of at least one polyisocyanate and at least one polyol. Suitable polyisocyanates, polyols, details and amounts thereof have been mentioned above.

According to a preferred embodiment the mention two components are combined in a suitable reactor, for example the mixture of 2,4- and 4,4-MDI, the carbodiimide modified 4,4-MDI and polyether glycol based on propylene oxide and propylene glycol (L800), and stirred at a suitable temperature, for example 20 to 100 °C, preferably 40 to 90 °C. This reaction is preferably done in an inert atmosphere, for example under dry nitrogen. This mixture is preferably stirred until the reaction has ended, for example for 1 to 8 hours, preferably 3 to 6 hours. The reaction is preferably conducted until an NCO-content of the reaction product is 3 to 30% by weight. The prepolymer obtained therewith is preferably directly transferred to step (C) of the process according to the present invention.

Step (B) of the process according to the present invention comprises the provision of at least one chain extender comprising at least one polyol, at least a first flame retardant, wherein the at least a first flame retardant is at least one phosphorous comprising polyol and at least one mineral filler and optionally at least a second flame retardant which is different from the first flame retardant and / or optionally at least one additional filler which is different from the at least one mineral filler.

The at least one polyol, the at least a first flame retardant, wherein the at least a first flame retardant, the at least one mineral filler and optionally the at least second flame retardant and / or optionally the at least one additional filler, details and amounts thereof have already mentioned above.

Step (B) of the process according to the present invention is preferably conducted by mixing and stirring of the single components in a suitable reactor, for example a mixture of three high molecular weight polyol containing one which is based on grafted SAN polyether polyol, with a molecular weight of 5400 g/mol, one which is based on glycerol, ethylene oxide and propylene oxide with a molecular weight of 4200 g/mol and one polyol with a molecular weight of 400 g/mol, based on trimethylolpropane and propylene oxide. Those three high molecular weight polyol are combined with propanediol as low molecular weight polyol, For example, the combination of the least polyol is stirred at a temperature of 0 to 100 °C, preferably 40 to 90 °C,. Then the at least one phosphorous comprising polyol is added to the mixture of the at least one polyol and then optionally the at least second flame retardant and the at least one mineral filler and optionally the at least one additional filler, preferably at a temperature of 0 to 100 °C, preferably 40 to 90 °C, is added to the at least one polyol during a time of for example 1 to 30 minutes.

Optionally present additional components could also be added in step (B), for example by addition to the mixture of at least one polyol, at least one phosphorous comprising polyol and at least one mineral filler. Suitable additional components have been mentioned above.

The chain extender obtained therewith is preferably directly transferred to step (C) of the process according to the present invention.

Step (C) of the process according to the present invention comprises the reaction of the at least one prepolymer from step (A) and the at least one chain extender from step (B) to obtain the elastomeric polyurethane.

Step (C) of the process according to the present invention is preferably done by simple mixing of the at least one prepolymer of step (A) and the at least one chain extender of step (B) in a suitable container under air. Generally the chain extender (B) is set first and prepolymer is added (A) to the mixture.

The single steps of the process according to the present invention can either be done by hand or by low-pressure dispensing machines or other kinds of machines like syringes, pumps, mixing chamber.

Mixing is done for a time of for example 10 seconds to 3 minutes, preferably 30 to 90 seconds. In parallel to the mixing or after the mixing, the mixture is preferably degassed in a vacuum chamber, in particular according to methods known to the skilled artisan, until the mixture is bubble free, for example for 10 seconds to 2 minutes. Next, the mixture is preferably poured into an open or closed mold, preferably at a temperature of 20 to 120 °C, and then preferably cured for 0,1 to 48 hours, preferably at a temperature of 20 to 120 °C.

Optionally a so-called maturation step can then be conducted to complete curing and reticulation. This is for example done by setting the cast polyurethane elastomer for 2 to 14 days at a temperature of 10 to 40 °C at 30 to 70% air humidity.

The elastomeric polyurethane according to the present invention shows physical properties which are at least comparable to the physical properties of products being present on the market.

In particular the elastomeric polyurethane according to the present invention shows a hardness of preferably 55A to 65A, acquired according to IS0 48-4 : 2018.

The elastomeric polyurethane according to the present invention shows a tensile strength of preferably 5 to 9 Mpa, acquired according to DIN 53504 : 2017.

The elastomeric polyurethane according to the present invention shows a Tear strength without nick of preferably 15 to 25 kN/m, acquired according to ISO 34-1 : 2015.

The elastomeric polyurethane according to the present invention shows a compression set of preferably less than 20%, acquired according to ISO 815-1 : 2020

The elastomeric polyurethane according to the present invention will find use in industrial applications that require physical, mechanical properties and fire-resistant properties, for example offshore applications, mine and quarries applications, pulp and paper applications, shoe soles applications, handling applications, military application, transport application, railway and Industrial rolls, for example paper mill rolls, wheels, and industrials tires, electric encapsulation, wheels, rollers, doctor blades, hydro cyclones, sieves, sport tracks, insulating panels, acoustic insulations, wind blades or bumpers.

The present invention therefore also relates to the use of the elastomeric polyurethane according to the present invention in offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers.

The present invention further relates to offshore applications, mine and quarries applications, pulp and paper applications, shoe soles applications, handling applications, military application, transport application railway and industrial rolls, industrials tires, electric encapsulation, wheels, rollers, doctor blades, hydro cyclones, sieves, sport tracks, insulating panels, acoustic insulations, wind blades or bumpers comprising a polyurethane according to the present invention.

### Examples:

### Test procedure in respect of Combustion Duration, Droplet Formation and Fire Test

The test procedure is inspired by standards IEC60695-11-10 : 1999 (internal method UL94, and NF P 92-503 (21 November 2002)). The principle is based on inflammability of a casted elastomer sample when this sample is submitted to a flame. The duration that is necessary to start flame ignition was measured. Additionally, the possible presence or not of burned droplets that could drop on a cotton, set 30 cm far from the sample, was taken into account.

A sample of the material to be analyzed was cut into the dimension of 1.3 mm × 1.3 mm × 12.7 mm. These cut samples were then hung up at a laboratory stand at a height of 30 cm between the lowest part of the sample and the surface of the table. A piece of white cotton is placed below the sample.

A torch was set and switched-on once the sample and cotton were placed as described above. One should ensure the torch to provide a blue fame with a flame dimension of 1.9 cm. The distance between the sample and the flame should be equal to 1.0 cm.

The test is based on the norm NF 92-503 and was run according to the following:
- Switch on the torch and the stopwatch.
- Put the flame on the inferior board of the sample for 10 seconds and then remove the torch.
- Measure the combustion duration. This is the time needed for the full inflamation of the sample. If this duration is sueprior to 15 seconds, one can conclude the sample has flame-retardant properties. If there is no combustion after the torch removal, thus means the sample is self-extinguishing, which is the optimal goal.
- Take also into account if there are droplet and if they burns or not.
- Take also into account if the cotton burns or not.
- At the end of the test, look at the sample to determine if there is a charcoal crust or not. If a charcoal crust can be observed it means the the sample is intumescent.
- A good fire test means a combustion duration > 15 s (or no combustion), intumescence effect and no droplets appearance and a sheet able to demold

The fire classes according to NF P92-503 are described in the table below.
- M0 : non-combustible, non-flammable (self-extinguish)
- M1 : combustible, non-flammable
- M2 : combustible, hardly flammable
- M3 : combustible, slightly flammable
- M4 : combustible, easily flammable

| Combustion duration | Droplets | Non-fire droplets | Fire droplets | Non-combustion of the cotton | Combustion of the cotton | Fire class |
|---|---|---|---|---|---|---|
| < 5s | No | | | | | M0 |
| | No | | | | | M1 |
| | Yes | X | | X | | M1 |
| | Yes | X | | | X | M4 |
| | Yes | | X | X | | M2 |
| | Yes | | X | | X | M4 |
| >5s | No | | | | | M2 |
| | Yes | X | | X | | M2 |
| | Yes | X | | | X | M4 |
| | Yes | | X | X | | M3 |
| | Yes | | X | | X | M4 |

The measurement of the hardness was carried out in accordance with standard ISO 48-4: 2018.

### Mn determination :

The number-average molecular weight (Mn) was determined by gel permeation chromatography (GPC) in tetrahydrofuran at 23°C. The procedure is according to DIN 55672-1: "Gel permeation chromatography, Part 1 - Tetrahydrofuran as eluent" (SECurity GPC System from PSS Polymer Service, flow rate 1.0 ml/min; columns: 2×PSS SDV linear M, 8×300 mm, 5 µm; RID detector). Polystyrene samples of known molar mass are used for calibration. The number-average molecular weight is calculated with software support. Baseline points and evaluation limits are fixed in accordance with DIN 55672 Part 1.

### Isocyanate value :

Measurements of Isocyanate value (%) were done in accordance with ISO 14896:2009.

**Table 1: used raw materials**

| Commercial name | Supplier | Type | Isocyanate value (%) | Hydroxyl value (mgKOH/g) | molecular weight (g/mol) | Functionality | Initiator |
|---|---|---|---|---|---|---|---|
| MDI 1806 | Covestro | 45:55 mixture of dicyclohexylmethane -4,4'- and -2,4'-diisocyanate | - | - | - | 2 | - |
| POLYETHER L 800 | Covestro | PPG polypropylene glycol | - | 534,3 | - | 2 | PG (propylene glycol) |
| MDI CD-S | Covestro | Carbodiimide-modified MDI: methylenediphenyl diisocyanate, oligomers | 29,5 | - | - | 2 | - |
| HYPERLITE^{®} POLYOL 1650 | Covestro | Polyproylene glycol styrene acrylonitrile | - | 21,6 | - | 3 | PG + SAN |
| DESMOPHEN^{®} 4011T | Covestro | Polypropylene glycol | - | 550,1 | - | 2 | PG |
| ARCOL POLYOL^{®} 1374 | Covestro | Polypropylene glycol | - | 27 | - | 2 | PG |
| SUSTERRA^{®} PROPANE DIOL | Covestro | Propane diol | - | 1474,6 | 76,1 | 2 | - |
| DABCO^{®} 33 LV | Evonik | Catalyst | - | - | - | - | - |
| Exolit OP550 | Clariant | Phosphorus polyol | - | 660 | - | 2 | - |
| Nofia OL1000 | FRX Polymers | Phosphanate oligomer | - | 1 | - | - | - |
| BRITOMYA V | Omya UK | Calcium carbonate powder | - | - | 100,1 | - | - |
| BARYTMEHL 901 | Venator (EX Sachtleben) | Baryum sulfate powder | - | - | 233,4 | - | - |
| Aluminium hydroxyde | Thermo fisher | Aluminium hydroxyde powder | - | - | 78 | - | - |

### Experimental part:

### Example 1 : Manufacturing of the Prepolymer used for all PUs:

363 g of methylene diphenyl diisocyanate (MDI), having a specific proportion of 55% by weight of 2,4-MDI and 45% by weight of 4,4-MDI, was stirred at 50°C under dry nitrogen. 560 g of Carbodiimide-modified MDI was added. 76 g of a polyether glycol based on propylene oxide and propylene glycol (Polyether L800) was also added, and the mixture was stirred for 3 to 6 hours at approximately 80 °C. The NCO content was measured and was found around 25.6% by weight.

### Example 2 : Manufacturing of the chain extender used for all PUs:

A polyol mixture of 406,0 g Hyperlite Polyol 1650 (Covestro Deutschland AG, M 5400 g/mol), 32,1 g of polyol 4011 T (based on trimethylol propane and PO, M 400 g/mol) and 545,4 g of Arcol Polyol 1374 (based on glycerol, ethylene oxide and propylene oxide, M 4200 g/mol) was stirred at room temperature. 15,2 g of Propandiol (SUSTERRA^{®}) is incorporated. Then 4,0 of catalyst component (Dabco ^{®} 33LV from EVONIK) were added.

While still stirring, flame-retardant additives are added from 4 to 9% by weight to the elastomer . The mixture was stirred for additional time if need, from 0 to 1 hour.

### Manufacturing of an elastomer :

The chain extender, mineral fillers and the prepolymer were stirred together for 30 seconds to 1 minute. A vacuum was then applied to degas the reaction mixture until bubble free. The mixture was poured into a closed mold with a temperature of 23 °C and cured for 24 hours at room temperature.

**Table 2: Manufacturing of the elastomers :**

| C : comparative example | | | | | | | | | | | |
|---|---|---|---|---|---|---|---|---|---|---|---|
| No. | Additive | Amount of Additive in wt-% | Filler | Amount of Filler in wt-% | Mass of Prepoly mer (in g) | Mass of the poyol mixture (different from the flame retardant) (in g) | Mass of Exolit OP550 (in g) | Mass of calcium carbonate (in g) | Mass of baryum sulfate (in g) | Mass of alumin ium trioxyd e (in g) | mass of Nofia OL1000 (in g) |
| C1 | - | - | - | - | 100 | 507,2 | - | - | - | - | - |
| C2 | Exolit^{®} OP550 | 10% | - | - | 100 | 362,4 | 50 | - | - | - | - |
| C3 | Exolit^{®} OP550 | 13% | - | - | 100 | 324,3 | 64 | - | - | - | - |
| C4 | Exolit^{®} OP550 | 17% | - | - | 100 | 288,9 | 77 | - | - | - | - |
| C5 | - | - | CaCO₃ | 4% | 100 | 507,2 | - | 24,3 | - | - | - |
| C6 | - | - | CaCO₃ | 6% | 100 | 507,2 | - | 36,4 | - | - | - |
| C7 | Exolit^{®} OP550 | 10% | CaCO₃ | 3% | 100 | 362,4 | 50 | 13,9 | - | - | - |
| C8 | Exolit^{®} OP550 | 5% | CaCO₃ | 3% | 100 | 422,3 | 28 | 15,7 | - | - | - |
| C9 | Exolit^{®} OP550 | 5% | CaCO₃ | 4% | 100 | 422,3 | 28 | 20,9 | - | - | - |
| 10 | Exolit^{®} OP550 | 5% | CaCO₃ | 5% | 100 | 422,3 | 28 | 26,1 | - | - | - |
| 11 | Exolit^{®} OP550 | 9% | CaCO₃ | 3% | 100 | 362,4 | 50 | 18,5 | - | - | - |
| 12 | Exolit^{®} OP550 | 9% | CaCO₃ | 4% | 100 | 362,4 | 50 | 22,4 | - | - | - |
| 13 | Exolit^{®} OP550 | 9% | CaCO₃ | 4% | 100 | 362,4 | 50 | 22,4 | - | - | - |
| 14 | Exolit^{®} OP550 | 9% | CaCO₃ | 5% | 100 | 362,4 | 50 | 27,7 | - | - | - |
| 15 | Exolit^{®} OP550 | 9% | BaSO4 | 4% | 100 | 362,4 | 50 | - | 22,4 | - | - |
| C16 | Exolit^{®} OP550 | 9% | CaCO₃ | 6% | 100 | 362,4 | 50 | 32,4 | - | - | - |
| C17 | Exolit^{®} OP550 | 2% | CaCO₃ | 9% | 100 | 465,9 | 12 | 56,6 | - | - | - |
| C18 | Exolit^{®} OP550 | 2% | CaCO₃ | 5% | 100 | 465,9 | 12 | 27,7 | - | - | - |
| C19 | Exolit^{®} OP550 | 13% | CaCO₃ | 4% | 100 | 324,3 | 64 | 20,9 | - | - | - |
| 20 | Exolit^{®} OP550 | 9% | CaCO3 + Al(OH)3 | 4% + 4% | 100 | 362,4 | 50 | 22,4 | - | 22,4 | - |
| C21 | Exolit^{®} OP550 | 5% | CaCO3 + Al(OH)3 | 3% + 3% | 100 | 422,3 | 28 | 15,7 | - | 15,7 | - |
| 22 | Exolit^{®} OP550 + Nofia^{®} OL1000 | 9% + 5% | CaCO3 | 4% | 100 | 362,4 | 50 | 22,4 | - | - | 26,7 |

**Table 3: Fire tests results for the manufactured elastomers :**

| C : comparative example | | | | | | | | | | |
|---|---|---|---|---|---|---|---|---|---|---|
| No. | Additive | Amount of Additive | Filler | Amount of Filler | Hardness | Molding Temp. | Sheet Aspect | Combustion Duration [s] | Droplet formation | Fire Test |
| C1 | - | - | - | - | 60 shore A | RT | OK | > 60 | Yes | M4 |
| C2 | Exolit^{®} OP550 | 10% | - | - | 60 shore A | RT | OK | 6 | Yes | M2 |
| C3 | Exolit^{®} OP550 | 13% | - | - | 60 shore A | RT | OK | 6 | Yes | M2 |
| C4 | Exolit^{®} OP550 | 17% | - | - | 60 shore A | RT | OK | 8.5 | Yes | M2 |
| C5 | - | - | CaCO3 | 4% | 60 shore A | RT | OK | 12.5 | Yes | M2 |
| C6 | - | - | CaCO3 | 6% | 60 shore A | RT | OK | 7 | Yes | M2 |
| C7 | Exolit^{®} OP550 | 10% | CaCO3 | 3% | 60 shore A | RT | OK | > 60 | No | M1 |
| C8 | Exolit^{®} OP550 | 5% | CaCO3 | 3% | 60 shore A | RT | OK | 10s | Yes | M2 |
| C9 | Exolit^{®} OP550 | 5% | CaCO3 | 4% | 62 shore A | RT | OK | 15 | Yes | M2 |
| 10 | Exolit^{®} OP550 | 5% | CaCO3 | 5% | 60 shore A | RT | OK | No combustion | No | M0 |
| 11 | Exolit^{®} OP550 | 9% | CaCO3 | 3% | 62 shore A | RT | OK | No combustion | No | M0 |
| 12 | Exolit^{®} OP550 | 9% | CaCO3 | 4% | 60 shore A | RT | OK | No combustion | No | M0 |
| 13 | Exolit^{®} OP550 | 9% | CaCO3 | 4% | 60 shore A | 50°C | OK | No combustion | No | M0 |
| 14 | Exolit^{®} OP550 | 9% | CaCO3 | 5% | 60 shore A | RT | OK | No combustion | No | M0 |
| 15 | Exolit^{®} OP550 | 9% | BaSO4 | 4% | 60 shore A | 50°C | OK | No combustion | No | M0 |
| C16 | Exolit^{®} OP550 | 9% | CaCO3 | 6% | 60 shore A | RT | OK | 15 | Yes | M4 |
| C17 | Exolit^{®} OP550 | 2% | CaCO3 | 9% | 60 shore A | RT | OK | 20 | Yes | M4 |
| C18 | Exolit^{®} OP550 | 2% | CaCO3 | 5% | 60 shore A | RT | OK | 25 | Yes | M4 |
| C19 | Exolit^{®} OP550 | 13% | CaCO3 | 4% | 60 shore A | RT | OK | 11 | Yes | M2 |
| 20 | Exolit^{®} OP550 | 9% | CaCO3 + Al(OH)3 | 4% + 4% | 60 shore A | RT | OK | No combustion | No | M0 |
| C21 | Exolit^{®} OP550 | 5% | CaCO3 + Al(OH)3 | 3% + 3% | 60 shore A | RT | OK | 20 | Yes | M2 |
| 22 | Exolit^{®} OP550 + Nofia^{®} OL1000 | 9% + 5% | CaCO3 | 4% | 60 shore A | RT | OK | No combustion | No | M0 |

## Claims

1. Elastomeric polyurethane comprising at least a first flame retardant in an amount of ≥ 5% to ≤ 9% by weight based on the total weight of the elastomeric polyurethane and at least one mineral filler in an amount of ≥ 3% to ≤ 5% by weight based on the total weight of the elastomeric polyurethane, wherein the at least a first flame retardant is at least one phosphorous comprising polyol, wherein the at least one mineral filler is selected from the group consisting of carbonates, sulfates, silicates, mixtures and hydrated modifications thereof and wherein the total amount of the first flame retardant and the mineral filler is in the range of ≥ 10% to ≤ 14% by weight, based on the total weight of the elastomeric polyurethane.

2. Polyurethane according to claim 1, wherein the phosphorous comprising polyol corresponds to general formula (3) 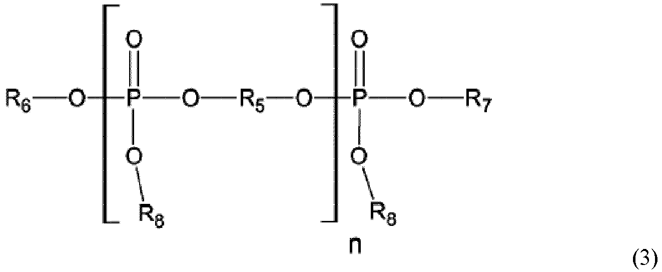 wherein R₅, R₆, R₇, R₈ and n have independently of another the following meanings:
n integer of 1 to 100, preferably 1 to 50, particularly preferred 2 to 10,
R₅ alkylene group having 1 to 15 carbon atoms, preferably 2 to 10 carbon atoms,
R₆ to R₈ independently of another, identical or different, hydrogen and/or carbon entities, preferably based on alkyl, aryl, alkenyl, acyl or hydroxyalkyl that can be substituted, and that can be based on oligomers or polymers nature, and/or be able to contain several heteroatoms that could be N, O, S or P, wherein the number of carbon atoms in each substituent is from 1 to 15, preferably 2 and 10.

3. Polyurethane according to claim 1 or 2, wherein the at least one mineral filler is selected from the group consisting of carbonates, sulfates, mixtures and hydrated modifications thereof, preferably a carbonate or hydrated modification thereof, more preferably selected from the group of Li₂CO₃, Na₂CO₃, K₂CO₃, MgCO₃, CaCO₃, BaCO₃, mixtures and hydrated modifications thereof.

4. Polyurethan according to any of claims 1 to 3, wherein the polyurethane comprises at least a second flame retardant which is different from the first flame retardant, preferably in an amount of ≥ 0,1 to ≤ 10% by weight based on the total weight of the elastomeric polyurethane.

5. Polyurethane according to any of claims 1 to 4, wherein the polyurethane comprises at least one additional filler, which is different from the at least one mineral filler, preferably wherein the additional filler is selected from the group consisting of SiO₂, CaO, MgO, Na₂O, K₂O, B₂O₃, Fe₂O₃, P₂O₅, zirconia, cerium oxide, TiO₂, Al(OH)₃, mixtures and hydrated modifications thereof, more preferably wherein the additional filler is Al(OH)3.

6. Polyurethane according to any of claims 1 to 5, wherein the polyurethane is obtained from the reaction of at least one prepolymer and at least one chain extender comprising the at least first flame retardant.

7. Polyurethane according to claim 6, wherein the at least one prepolymer is obtained from the reaction of at least one polyisocyanate and at least one polyol, and the at least one chain extender is a mixture of at least one polyol and at least a first flame retardant.

8. Polyurethane according to any of claims 1 to 7, wherein the molar ratio of isocyanate reactive groups in the chain extender to isocyanate groups in the prepolymer is 0.7 to 1.3.

9. Polyurethane according to any of claims 1 to 8, wherein the stoichiometric ratio of isocyanates groups being present in the at least one polyisocyanate to hydroxyl groups being present in the at least one polyol in the prepolymer is 1.5 to 20.

10. Polyurethane according to any of claims 1 to 9, wherein it shows a hardness of 55A to 65A, acquired according to ISO 48-4 : 2018 and / or a tensile strength of 5 to 9 Mpa, acquired according to DIN 53504 : 2017 and / or a Tear strength without nick of 15 to 25 kN/m, acquired according to ISO 34-1 : 2015 and / or a compression set of less than 20%, acquired according to ISO 815-1: 2020.

11. Process for the preparation an elastomeric polyurethane according to any of claims 1 to 10, at least comprising the following steps:
(A) Provision at least prepolymer made of at least one polyisocyanate and at least one polyol,
(B) Provision at least one chain extender comprising at least one polyol, at least a first flame retardant and at least one mineral filler and optionally at least a second flame retardant which is different from the first flame retardant and / or optionally at least one additional filler which is different, and
(C) Reaction of the at least one prepolymer from step (A) and the at least one chain extender from step (B) to obtain the elastomeric polyurethane,
wherein the at least a first flame retardant is at least one phosphorous comprising polyol and wherein the at least one mineral filler is selected from the group consisting of carbonates, sulfates, silicates, mixtures and hydrated modifications thereof.

12. Process for the preparation an elastomeric polyurethane according to claim 11, wherein the steps of the process according to the present invention can either be done by hand or by low-pressure dispensing machines or other kinds of machines like syringes, pumps, mixing chamber.

13. Use of the elastomeric polyurethane according to any of claims 1 to 10 in offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades, or bumpers.

14. Offshore applications, mine and quarries applications, pulp and paper applications, shoe soles applications, handling applications, military application, transport application, railway and industrial rolls, industrials tires, electric encapsulation, wheels, rollers, doctor blades, hydro cyclones, sieves, sport tracks, insulating panels, acoustic insulations, wind blades or bumpers comprising a polyurethane according to any of claims 1 to 10.
